# EUROPEAN PATENT SPECIFICATION

(11) **EP 1 462 362 B1**
(45) Date of publication and mention of the grant of the patent: **19.10.2005**
(21) Application number: 03251931.6
(22) Date of filing: 27.03.2003
(51) Int. Cl.: B64C 27/625, B64C 27/43, A63H 27/133

(54) **Model helicopter rotor pitch control mechanism**
Rotorblattverstelleinrichtung für einen Modellhubschrauber
Dispositif de commande de pas d'un rotor d'un modèle réduit d'helicoptère

(43) Date of publication of application: 29.09.2004
(73) Proprietor: Kyosho Corporation, Chiyoda-ku, Tokyo 102-0093 (JP)
(72) Inventor: Kunii, Makoto, Atsugi, Kanagawa 243-0034 (JP); Kamiya, Yuji, Atsugi, Kanagawa 243-0034 (JP)
(74) Representative: Naylor, Matthew John

(56) References cited:
- DE-U- 20 007 283
- DE-U- 20 104 589
- DE-U- 29 502 393
- US-A- 3 228 478

## Description

The present invention relates to a helicopter model rotor pitch control mechanism. Preferably, in the mechanism, the Bell-Hiller control system comprises a stabilizer to improve a flying stability at the time of making a circular flight in fore/aft and left/right directions and a main rotor for providing a helicopter with ascent/descent and thrust. More particularly the invention preferably relates to a helicopter model rotor pitch control mechanism for controlling pitch angles of the two rotors.

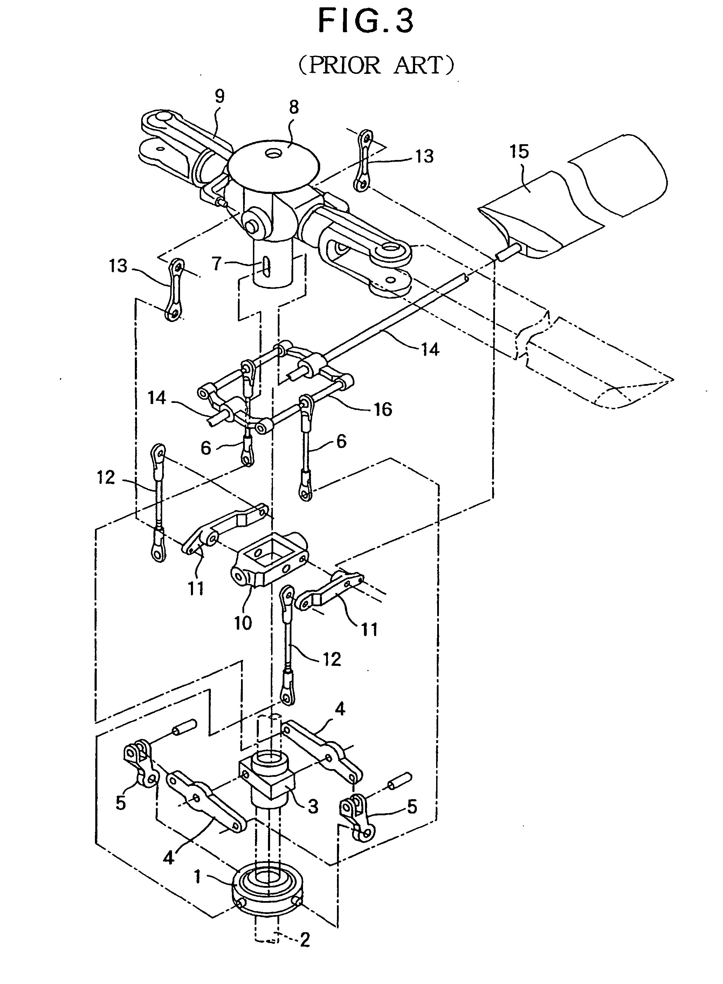

Hereinafter, the rotor pitch control mechanism in the helicopter model having the conventional Bell-Hiller control system 1 will be explained with reference to Fig. 3.

The numeral denotes an upper swash plate assembly, which shows a similar action to a lower swash plate in the swash plate when making up/down, left/right and forward/backward movements by means of the aileron servo and the elevator servo and the pitch servo (all not shown).

Said upper swash plate 1 is inserted into a mast 2, into which a rectangular slide block 3 is inserted vertically movably such that a pair of washout arms 4 are pivotally supported at opposite sides thereof said rectangular slide block 3. Each washout arm 4 has a first end at which a wash arm link 5 is pivoted to a first end thereof and a second end at which a rod 6 is pivotally supported.

The numeral 7 denotes a center hub secured to the upper end portion of said mast 2 and, further, a yoke 8 is secured at the upper end portion of said center hub 7. Said yoke 8 is rotatably provided with a main rotor grip 9 to which main rotors are to be attached. The numeral 10 denotes a see-saw pivotally supported to surround said center hub 7 having opposite sides at which mixing levers 11 are pivotally supported substantially centrally.

Said mixing lever 11 has a first end and a second end. Further, there is provided a rod 12 pivoted to the first end of said mixing lever 11. On the other hand, there is provided an arm 13 having a first end and a second end. Said first end of the arm 13 is connected to the main rotor grip 9 while said second end of the arm 13 is pivoted to the second end of said mixing lever 11.

In a plane in which said see-saw 10 perpendicularly crosses said mixing lever 11, a stabilizer bar 14 having opposite ends attached to respective stabilizer plates 15 and extending through a frame shaped Hiller control lever 16 and the center hub 7 is secured to said Hiller control lever 16 in such a manner not to rotate. Therefore, the stabilizer bar 14 is allowed to rotate in response to the swing action of the Hiller control lever 16.

Said frame shaped Hiller control lever 16 is arranged to surround the see-saw 10. As mentioned above, said stabilizer bar 14 is secured to said frame shaped Hiller control lever 16. Said frame shaped Hiller control lever 16 has shaft portions parallel to said stabilize bar 14. Said rod 6 has a first end and a second end, said first end being pivoted to said mixing bar 11 while said second end of the rod 6 is pivoted to said parallel shaft portion of the stabilizer 14.

With the thus constructed conventional rotor pitch control mechanism, the mixing lever 11 is pivoted by way of the rod 12 in response to vertical movements of the upper swash plate 1 driven by the pitch servo. The pivotal movement causes the main rotor grip 9 by way of the rod 13 to rotate such that the pitch angle of the main rotor is varied to cause the helicopter to ascend and descend.

It is to be noted that because the slide lock 3 is connected to the upper swash plate 1 by way of the washout link 5, the slide lock 3 also ascend and descend in response to the vertical movements of the upper swash plate 1 without influencing the change in the main rotor pitch angle.

Next, when the upper swash plate is swung left/right and fore/aft directions by driving the aileron or elevator servo, the washout arm 4 is swung in response to the rotation of the upper swash plate 1, thus causing the Hiller control lever 16 to be swung about the stabilizer bar 14 by way of the rod 6.

With the swing action of said Hiller control lever 16, the pitch angle of the stabilizer blade 15 attached to the stabilizer bar 14 secured to said Hiller control lever 16 varies in response to the rotation of the upper swash plate 1 such that the see-saw 10 pivoted to the center hub 7 is caused to be swung in accordance with the change in the lift balance of the stabilizer blade 15 to cause the mixing lever 11 pivoted to the see-saw 10 to swing about the second end of the rod 12 pivoted to the upper swash plate 1. Then, the rod 13 pivoted to the second end of the mixing lever 11 conveys the change in the lift balance to the main rotor grip 9 such that the pitch angle of the main rotor 18 varies with the result that the helicopter makes a circular flight in left/right directions when the aileron servo is driven and the helicopter makes a fore/aft flight when the elevator servo is driven.

In this way, the above-mentioned conventional model helicopter rotor pitch control mechanism is constructed in such a way that the stabilizer 14, stabilizer blade 15, the see-saw 10, the mixing lever 11 and the main rotor 18 of the pitch angle of the main rotor grip 9 is changed by way of the Hiller control lever. Therefore, said prior art mechanism has a problem that the structure becomes too complex, requires too many man hours for assembly work, involves too many parts, and becomes too costly. In addition, the area of the see-saw becomes too large, making the entire structure heavy-duty.

The present invention preferably addresses one or more of the above problems. Preferably, a model helicopter rotor pitch control mechanism is provided which is capable of making a substantial cost reduction while downsizing models as well as improving the mixing lever ration freedom which determines the helicopter flight characteristics due to the advantageous see-saw fixing position to meet extensive user needs.

This is obtained by the model helicopter pitch control mechanism of claim 1.
Fig. 1 is an exploded perspective view of the model helicopter rotor pitch control mechanism of the present invention;
Fig. 2 is a perspective view of said control mechanism being assembled; and
Fig. 3 is an exploded perspective view of the conventional rotor pitch control mechanism.

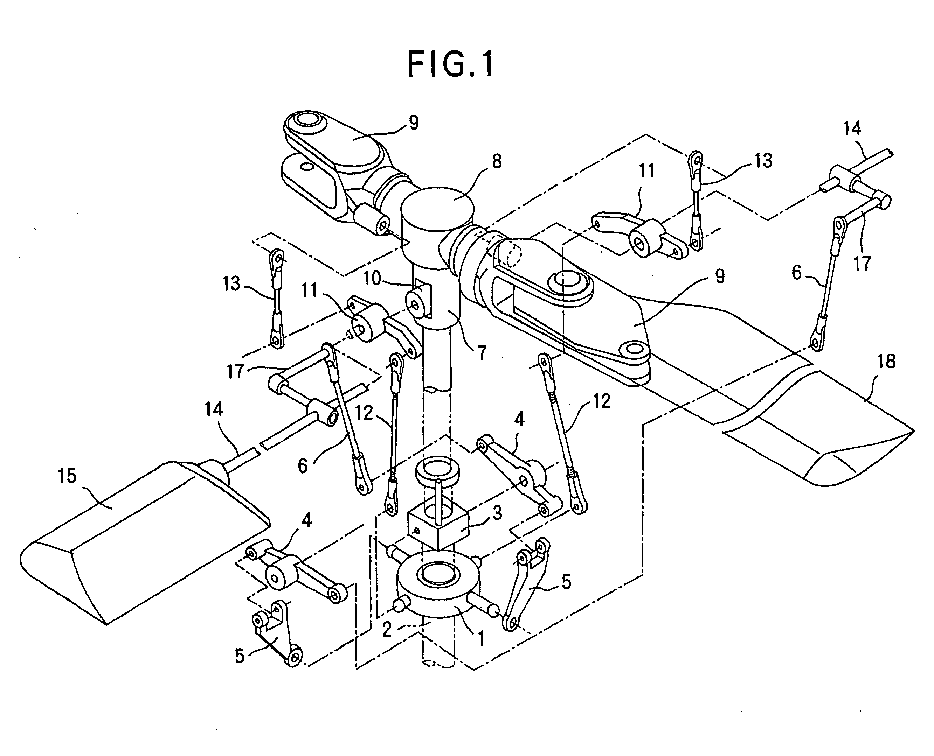

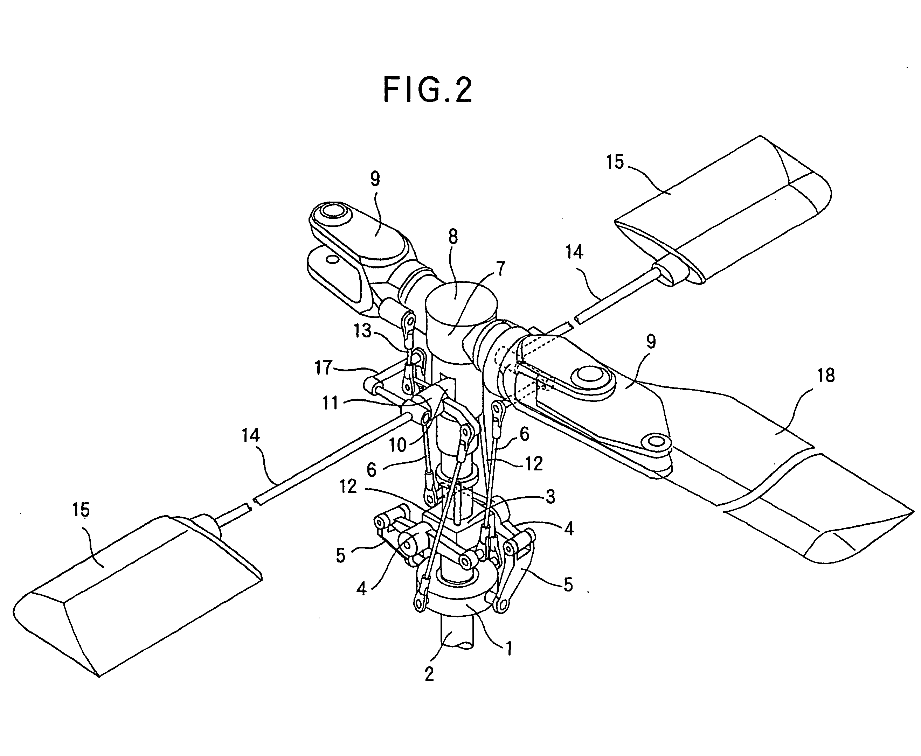

Hereinafter, the structure of the model helicopter rotor pitch control mechanism of the present invention will be explained with reference to Fig. 1 and Fig. 2. It is to be noted in this connection that the similar numerals used in Fig. 3 will be omitted.

First of all, the similar structure to those in Fig. 3 is that one end of the washout arm 4 is pivoted to opposite sides of the upper swash plate 1 by way of the washout arm link 5, said washout arm 4 having an intermediate portion pivoted to the slide block 3, a first end of the rod 6 being pivoted to a second end of said washout arm 4, said the other end of the rod 6 being pivoted to one end of L-shaped Hiller control lever 17.

Further, the stabilizer bar 14 has an intermediate portion pivoted to the mixing lever 11. Said mixing lever 11 has a first end connected to the main rotor grip 9 by way of the rod 13 to attach the main rotor 18 thereto. On the other hand, said mixing lever also has a second end pivoted to the tip end of the rod 12 having a first end pivoted to the position where the upper swash plate 1 perpendicularly crosses said washout arm link 5.

With the thus constructed rotor pitch control mechanism of the present invention, the mixing lever 11 is swung by way of the rod 12 when the pitch servo is driven to cause the upper swash plate 1 to be vertically moved. Said swing action further causes the main rotor grip 9 to swing about the yoke 8 by way of the rod 13 such that the pitch angle of the main rotor 18 is varied to cause the helicopter ascend and descend.

Next, the washout arm 4 is swung in response to the rotation of the upper swash plate 1 by way of the washout arm link 5 when the aileron or elevator servo is driven to cause the upper swash plate 1 swings left/right or fore/aft directions. Then, the Hiller control lever 17 is swung by way of the rod 6.

As a result, the stabilizer bar 14 rotatably pivoted to the see-saw 10 is swung such that the pitch angle of the stabilizer blade 15 varies in response to the revolution of the swash plate 1, thus creating a change in the lift balance to cause the see-saw 10 pivoted to the center hub 7 to rotate such that the mixing lever 11 pivoted to said see-saw is caused to swing about the second end of the rod 12 pivoted to the upper swash plate 11. Therefore, the rod 13 pivoted to the second end of the mixing lever 11 conveys the change in the lift balance to the main rotor grip 9 to change the pitch angle of the main rotor 18.

Consequently, the helicopter make a circular flight in the left/right directions when the aileron servo is driven while the helicopter makes fore/aft flights when the elevator servo is driven.

As described in the foregoing, the first end of the mixing lever pivoted to the stabilizer attached to the see-saw is connected to the upper swash plate while the second end thereof is connected to the main rotor grip by way of the rod such that the change in the lift balance is, when generated, conveyed to the main rotor grip to change the pitch angle of the main rotor, thus improving the flight stability of the helicopter.

Further, the mixing lever is be pivoted to the stabilizer bar without being attached to the see-saw as in the prior art, easily downsizing the see-saw as well as simplifying the production process by virtue of simple structure, reducing the number of parts, and cutting costs.

## Claims

1. A model helicopter rotor pitch control mechanism comprising
an upper swash plate (1);
a washout arm link (5) having a first end and a second end, said first end of the washout arm link (5) being pivoted in facing relation to said upper swash plate (1);
a washout arm (4) having a first end and a second end, said first end of the washout arm (4) being pivoted to said second end of the washout arm link (5);
a mast (2);
a slide block (3) vertically movable relative to said mast, said washout arm (4) being pivoted to said slide block;
a center hub (7);
a see-saw (10) swingably provided in said center hub (7);
a stabilizer bar (14) having opposite ends;
a stabilizer blade (15) attached to each of said opposite ends of the stabilizer bar (14);
a Hiller control lever (17) having a first end and a second end, said first end of the Hiller control lever (17) being connected to said stabilizer bar (14) and said second end of the Hiller control lever (17) being connected to said washout arm (4) by way of a first rod (6);
a mixing lever (11) having a first end, an intermediate portion and a second end, said first end of the mixing lever (11) being swingably connected to said upper swash plate (1), said intermediate portion of the mixing lever (11) being rotatably pivoted to said stabilizer bar (14); and
a main rotor grip (9) attached to the second end of said mixing lever (11) by way of a second rod (13), the pitch of said main rotor grip (9) being adjustable via said second rod (13).

## Patentansprüche

1. Rotorblattverstellmechanismus für Modellhubschrauber, umfassend
eine obere Taumelscheibe (1);
ein Schränkungsarm-Verbindungsstück (5) mit einem ersten Ende und einem zweiten Ende, wobei das erste Ende des Schränkungsarm-Verbindungsstücks (5) in einer gegenüberliegenden Beziehung zur oberen Taumelscheibe (1) geschwenkt wird,
einen Schränkungsarm (4) mit einem ersten Ende und einem zweiten Ende, wobei das erste Ende des Schränkungsarms (4) zum zweiten Ende des Schränkungsarm-Verbindungsstücks (5) geschwenkt wird;
einen Mast (2);
ein Gleitstück (3), das relativ zum Mast (2) vertikal beweglich ist, wobei der Schränkungsarm (4) zum Gleitstück (3) geschwenkt wird;
eine Mittelnabe (7);
einen Schwingarm (10), der in der Mittelnabe (7) schwingbar bereitgestellt ist;
einen Stabilisierungsstab (14) mit gegenüberliegenden Enden;
ein an jedem der gegenüberliegenden Enden des Stabilisierungsstabs (14) angebrachtes Stabilisierungsblatt (15);
einen Hiller-Steuerhebel (17) mit einem ersten Ende und einem zweiten Ende, wobei das erste Ende des Hiller-Steuerhebels (17) mit dem Stabilisierungsstab (14) verbunden ist und das zweite Ende des Hiller-Steuerhebels (17) über eine erste Stange (6) mit dem Schränkungsarm (4) verbunden ist;
einen Mischhebel (11) mit einem ersten Ende, einem Zwischenabschnitt und einem zweiten Ende, wobei das erste Ende des Mischhebels (11) schwingbar mit der oberen Taumelscheibe (1) verbunden ist und der Zwischenabschnitt des Mischhebels (11) zum Stabilisierungsstab (14) drehbar geschwenkt wird; und
eine Hauptrotorhalterung (9), die über eine zweite Stange (13) am zweiten Ende des Mischhebels (11) angebracht ist, wobei der Nickwinkel der Hauptrotorhalterung (9) über die zweite Stange (13) einstellbar ist.

## Revendications

1. Mécanisme de commande de pas d'un rotor d'un modèle réduit d'hélicoptère comprenant
un plateau incliné supérieur (1);
une liaison de bras de lavage (5) ayant une première extrémité et une seconde extrémité, ladite première extrémité de ladite liaison de bras de lavage (5) étant amenée à pivoter selon une relation faisant face audit plateau incliné supérieur (1);
un bras de lavage (4) ayant une première extrémité et une seconde extrémité, ladite première extrémité du bras de lavage (4) étant amenée à pivoter à ladite seconde extrémité de la liaison de bras de lavage (5);
un mât (2);
un bloc coulissant (3) déplaçable verticalement relativement audit mât, ledit bras de lavage (4) pivotant audit bloc coulissant;
un moyeu central (7);
une petite bascule (10) réalisée d'une manière pivotante dans ledit moyeu central (7);
une barre de stabilisation (14) ayant des extrémités opposées;
une lame de stabilisation (15) fixée à chacune desdites extrémités opposées de la barre de stabilisation (14);
un levier de commande Hiller (17) ayant une première extrémité et une seconde extrémité, ladite première extrémité dudit levier de commande Hiller (17) étant reliée à ladite barre de stabilisation (14), et ladite seconde extrémité du levier de commande Hiller (17) étant reliée audit bras de lavage (4) par une première tige (6);
un levier de mélange (11) ayant une première extrémité, une portion intermédiaire et une seconde extrémité, ladite première extrémité du levier de mélange (11) étant reliée d'une manière oscillante audit plateau incliné supérieur (1), ladite portion intermédiaire du levier de mélange (11) pouvant pivoter d'une manière rotative à ladite barre de stabilisation (14); et
une prise de rotor principale (9) fixée à la seconde extrémité dudit levier de mélange (11) par une seconde tige (13), le pas de ladite prise de rotor principal e (9) étant ajustable par ladite seconde tige (13).
